(19) Europäisches Patentamt
European Patent Office
Office européen des brevets

(11) EP 2 104 082 B1

(12) # FASCICULE DE BREVET EUROPEEN

(45) Date de publication et mention de la délivrance du brevet:
**28.06.2017 Bulletin 2017/26**

(51) Int Cl.:
***G09B 23/08*** *(2006.01)* ***G01N 15/08*** *(2006.01)*

(21) Numéro de dépôt: **09290136.2**

(22) Date de dépôt: **26.02.2009**

(54) **Dispositif représentatif d'un réseau poreux carbonate et procédé de fabrication**

Repräsentative Vorrichtung eines porösen Karbonatnetzes und Herstellungsverfahren

Device representing a porous carbonate network and manufacturing method

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.03.2008 FR 0801191**

(43) Date de publication de la demande:
**23.09.2009 Bulletin 2009/39**

(73) Titulaire: **IFP Énergies nouvelles**
**92852 Rueil-Malmaison Cedex (FR)**

(72) Inventeurs:
- **Robin, Michel**
**78300 Poissy (FR)**
- **Algive, Lionnel**
**92500 Rueil-Malmaison (FR)**
- **Bekri, Samir**
**92500 Rueil-Malmaison (FR)**

(56) Documents cités:
**FR-A- 2 756 046 US-A- 4 882 763**

- **WENRONG M ET AL: "PORE AND THROAT NETWORK MODEL AND ITS APPLICATION TO THE OPTIMAL SELECTION OF TEMPORARY PLUGGING PARTICLES" SPE PAPERS, XX, XX, 14 février 1996 (1996-02-14), pages 293-300, XP002035933**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 104 082 B1

## Description

La présente invention concerne le domaine de la pétrophysique, et plus particulièrement elle concerne un dispositif pour l'étude en laboratoire du déplacement de fluides polyphasiques en milieu poreux, tel qu'un réservoir souterrain.

L'industrie pétrolière, et plus précisément l'exploration et l'exploitation de gisements pétroliers, ou encore le stockage géologique de CO2, nécessitent d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. Connaître le gisement signifie notamment connaître les propriétés pétrophysiques du sous-sol en tout point de l'espace, et tout particulièrement les mécanismes de déplacements d'hydrocarbures dans les gisements souterrains.

Un réservoir pétrolier est constitué d'une roche dite, roche réservoir. Cette roche constitue un milieu poreux, formé par une structure solide (ou matrice) comportant des cavités ou pores reliés entre eux par des canaux. Les pores peuvent être vides ou bien saturés par un ou plusieurs fluides. Il s'agit par exemple de roches poreuses telles que des grès ou des calcaires recelant des fluides dans les pores et notamment des hydrocarbures. Ces roches-réservoirs peuvent être caractérisées avec précision à partir de grandeurs physiques propres parmi lesquelles la porosité, la perméabilité i.e. l'aptitude à laisser circuler les fluides dont elle est saturée, la mouillabilité, la géométrie et la connectivité des pores etc.

Pour produire les hydrocarbures contenus dans de telles roches, il est indispensable de maîtriser les phénomènes d'écoulement de fluide au sein de ces roches. Ceci permet de définir un schéma de production du réservoir.

Pour ce faire, depuis longtemps, l'industrie pétrolière allie les mesures sur champ (in situ) aux modélisations expérimentales (réalisées au laboratoire) et/ou numériques (réalisées au moyen de logiciels). Les modélisations des gisements pétroliers constituent donc une étape technique indispensable à toute exploration ou exploitation de gisement. Ces modélisations ont pour but de fournir une description du gisement.

L'observation expérimentale des mécanismes physiques du déplacement des fluides à l'échelle du pore est fondamentale pour développer et confirmer leur modélisation.

## État de la technique

Les expérimentateurs ont alors recours à des matières transparentes, généralement le verre ou un polymère, pour représenter de manière schématique un milieu poreux. Le modèle le plus simple est celui du capillaire. Pour rendre compte de l'influence des seuils et des connectivités, des dispositifs plus élaborés existent, tels que l'assemblage de billes, pour représenter un milieu non consolidé, ou les micromodèles.

Un micromodèle permet l'étude du déplacement des fluides polyphasiques à l'échelle du pore, sous microscope, en conditions thermodynamiques contrôlées. Les micromodèles sont constitués d'un réseau délimitant un espace poreux au sein duquel sont réalisées des expériences d'écoulement, d'imbibition ou de drainage, en dynamique ou en quasi-statique. Afin de pouvoir faire des expériences aux conditions de pression et température constatées *in situ,* la matière adoptée est le verre. Les micromodèles permettent d'étudier :

- la répartition des phases selon les conditions de mouillabilité et leur influence sur les perméabilités relatives,
- le phénomène de changement de mouillabilité, lié au vieillissement
- les phénomènes de percolation et de stabilité des fronts d'injection,
- la dispersion d'un traceur,
- le transport réactif d'un soluté...

Par le brevet US 4 882 763, on connaît un procédé de fabrication d'un tel modèle représentatif d'un milieu poreux. Ce procédé consiste essentiellement à graver dans du verre un réseau de pores dont la configuration reproduit celle des pores d'une roche poreuse. La transposition est réalisée en formant une image numérisée du réseau de pores par projection de lumière au travers d'une fine tranche de roche, que l'on reproduit sur le substrat de verre par un procédé photolithographique avec attaque chimique.

D'autres procédés permettant de fabriquer un micromodèle en verre par gravure à partir d'une image 2D du réseau de pore réel sont connus. On peut par exemple se référer aux documents suivants : le brevet EP 0.189.660 et le brevet FR 2.756.046 (US 6.226.390), qui permet de modéliser la distribution des pores d'un échantillon poreux de porosité variable par des canaux entrecroisés formant un réseau, dont les noeuds constituent des pores, la taille de ces canaux traduisant des propriétés physiques du milieu poreux à étudier. Le brevet US 4.882.763 divulgue un micromodèle

représentatif d'un milieu poreux obtenu par gravure dans du verre d'un réseau de pores, à partir d'une image numérisée du réseau poreux obtenu par projection de lumière à travers une tranche de roche et coloration de la roche.

Que ce soit pour les réactions surfaciques ou les phénomènes liés à la mouillabilité, la physique observée est conditionnée par l'état de surface du substrat. Or le verre n'est correctement représentatif que des milieux gréseux, contenant de la silice.

Cependant, il existe un intérêt croissant pour les réservoirs carbonatés qui représentent un quart des réservoirs connus, et environ 40% des réserves d'huile. En particulier, dans le contexte du stockage géologique du $CO_2$, plusieurs projets ont lieu dans des carbonates. Ces réservoirs sont alors le siège de réactions de dissolution et de déposition de calcite qui, afin d'assurer la pérennité du projet, doivent être étudiées en laboratoire.

Ainsi, l'objet de l'invention concerne un micromodèle en verre pour l'étude du déplacement de fluide polyphasique en milieu poreux carbonaté, comportant un réseau de pores recouverts d'un dépôt de carbonate de calcium.

L'invention concerne également un procédé pour fabriquer un tel micromodèle, utilisant le principe d'électrodéposition.

L'invention concerne également un procédé pour l'étude en laboratoire du déplacement de fluide polyphasique en milieu poreux carbonaté, tel qu'un réservoir souterrain, utilisant un tel micromodèle.

**Le dispositif et le procédé selon l'invention**

Un objet de l'invention concerne un dispositif pour l'étude de déplacement de fluides en milieu poreux carbonaté, comportant au moins une plaque de verre sur laquelle est gravé un ensemble de canaux formant un réseau. Les canaux de ce dispositif comportent un dépôt de carbonate de calcium.

Selon l'invention, ce réseau de canaux peut avoir une géométrie déterminée pour permettre des écoulements similaires dans le réseau et le milieu.

Le dispositif peut comporter un moyen de fermeture étanche du réseau, pouvant comporter un revêtement de calcite. Ce moyen de fermeture étanche peut être une seconde plaque de verre, assemblée sur la face gravée de la première plaque de verre, de façon à fermer le réseau.

Cette seconde plaque de verre peut comporter un premier orifice à une extrémité, et un second orifice à une autre extrémité, les orifices étant disposés de façon à pouvoir injecter par l'un des orifices des fluides à travers le réseau de canaux, et de façon à pouvoir extraire du dispositif par le second orifice, les fluides ayant circulé à travers le réseau.

Un autre objet de l'invention concerne un procédé de fabrication d'un dispositif pour l'étude de déplacement de fluides en milieu poreux carbonaté, dans lequel on grave sur une face d'une plaque de verre transparent un ensemble de canaux formant un réseau. Le procédé comporte les étapes suivantes :

- on dépose un revêtement électriquement conducteur à l'intérieur des canaux ;
- on plonge la première plaque de verre dans une solution calcifiante ; et
- on porte le revêtement électriquement conducteur à un potentiel électrique, de façon à réaliser un dépôt de carbonate de calcium dans les canaux par électrodéposition.

Selon l'invention, le revêtement électriquement conducteur peut être un revêtement métallique.

On peut de façon avantageuse fermer le réseau de façon étanche en assemblant un moyen de fermeture, tel qu'une seconde plaque de verre, sur la face gravée de la plaque de verre.

Enfin, l'invention concerne également un procédé pour l'étude en laboratoire du déplacement de fluides en milieu poreux carbonaté, tel qu'un réservoir souterrain, dans lequel :

- on place le dispositif objet de l'invention dans un système adapté à appliquer des conditions thermodynamiques choisies,
- on injecte au moins un fluide dans le réseau de canaux, et
- on observe le déplacement de fluides à travers la plaque de verre.

D'autres caractéristiques et avantages de l'invention apparaîtront à la lecture de la description ci-après d'exemples non limitatifs de réalisations, en se référant aux figures annexées et décrites ci-après.

## Présentation succincte des figures

- La figure 1 représente un micromodèle poreux destiné à l'étude du déplacement de fluide polyphasique en milieu poreux carbonaté.
- La figure 2A représente une première plaque de verre transparent du micromodèle, sur laquelle est gravé un réseau de canaux.
- La figure 2B représente une seconde plaque de verre transparent comportant des orifices nécessaires pour l'entrée et la sortie des fluides.
- La figure 3 illustre les différentes étapes du procédé selon l'invention, permettant de construire un micromodèle poreux destiné à l'étude des écoulements en milieu poreux carbonaté.
- La figure 4 montre un masque permettant de reporter un motif de réseau de canaux sur une plaque de verre lisse.
- Les figures 5A à 5D illustrent les étapes d'impression d'un masque sur une plaque de verre par sérigraphie.
- Les figures 6A à 6C illustrent l'étape de gravure du réseau de canaux sur une plaque de verre.
- La figure 7A illustre le dépôt d'un revêtement conducteur au fond des canaux.
- La figure 7B illustre le résultat final du dépôt d'un revêtement conducteur au fond des canaux suivi d'un nettoyage du vernis à l'aide de solvants.

## Description détaillée de l'invention

La figure 1 représente un exemple de micromodèle poreux destiné à l'étude du déplacement de fluides en milieu poreux carbonaté, en conditions thermodynamiques contrôlées. Ce dispositif est particulièrement adapté à l'étude des écoulements polyphasiques (eau - huile - gaz) en condition de pression et température d'un réservoir pétrolier carbonaté. Un tel dispositif comporte deux plaques de verre (verre à vitre) soudées :

- une première plaque (PV1) de verre transparent (Fig. 2A), sur laquelle est gravé un ensemble de canaux (R) entrecroisés formant un réseau, dont les noeuds constituent des pores. Les canaux ont des tailles qui traduisent des propriétés physiques du milieu poreux carbonaté à étudier.
- une seconde plaque (PV2) de verre transparent (Fig. 2B) assemblée sur la face gravée de la première plaque de verre. Elle comporte des orifices nécessaires pour l'entrée (EF) et la sortie (SF) des fluides : un premier orifice placé à une de ses extrémités, permet d'injecter différents fluides à travers le réseau de canaux, et un second orifice placé à l'autre extrémité permet d'extraire du micromodèle le ou les fluides ayant circulé à travers le réseau. Une zone étanche (ZE) évite aux fluides de s'écouler vers l'extérieur autrement que par les orifices EF et SF prévus à cet effet.

Pour être adapté à l'étude de milieu poreux carbonaté et non gréseux, les canaux de ce micromodèle comportent un dépôt de carbonate de calcium.

Sur les figures 2A et 2B, les plaques de verre ont une longueur notée L, une largueur notée l, et une épaisseur notée *e*. Les orifices de la seconde plaque ont un diamètre de 2,5 mm. Le réseau de canaux, R, a une longueur $L_r$ et une largueur $l_r$. La longueur de veine est notée $L_v$. La veine est un petit réservoir permettant la répartition des fluides (à l'entrée), ou la collecte des fluides (à la sortie du milieu poreux).

La figure 3 illustre les différentes étapes du procédé selon l'invention, permettant de construire un micromodèle poreux destiné à l'étude des écoulements en milieu poreux carbonaté. Le procédé utilise une technique d'électrodéposition consistant à déposer du carbonate de calcium sur une électrode métallique portée à un potentiel électrique négatif. Un potentiel électrique est l'une des grandeurs définissant l'état électrique d'un point de l'espace. Son unité est le volt. Il peut être défini de la façon suivante : pour n'importe quel point d'un circuit électrique, énergie équivalente au travail effectué pour y amener une unité de charge positive à partir d'un point de référence de potentiel zéro.

Le procédé comporte les étapes suivantes :

- on grave (GRAV), sur une face de la première plaque de verre transparent, un ensemble de canaux entrecroisés formant un réseau dont les noeuds constituent des pores. Ces canaux ont des tailles traduisant des propriétés physiques du milieu poreux carbonaté.

- on dépose (DEPM) un revêtement électriquement conducteur à l'intérieur des canaux ;

- on plonge (PSC) la première plaque de verre dans une solution calcifiante ;

- on porte (PN) le revêtement électriquement conducteur à un potentiel électrique négatif, de façon à réaliser un dépôt de carbonate de calcium dans les canaux par électrodéposition ;

- on assemble (ASS) une seconde plaque de verre transparent sur la face gravée de la première plaque de verre.

Un exemple de réalisation du procédé selon l'invention est décrit ci-après.

1- Gravure d'un réseau de canaux représentatif d'un milieu poreux

*A- Création de masque représentatif d'un milieu poreux*

Dans un premier temps, on construit un motif représentant le réseau poreux que l'on souhaite étudier. Puis à partir de ce motif, on construit un masque (Fig. 4), permettant de reporter ce motif sur une plaque de verre lisse, par une méthode de sérigraphie par exemple.

De nombreuses techniques sont connues des spécialistes pour mettre au point de tels masques. On peut par exemple, utiliser un logiciel de conception assistée par ordinateur (CAO), pour représenter des disques représentatifs (taille, géométrie, ...) des pores du milieu poreux à étudier. Pour obtenir une meilleure représentativité de la répartition naturelle des tailles de pores, on crée des modèles hétérogènes dont la configuration présente un caractère aléatoire, à l'aide de tirages aléatoires. Ce type de technique est décrit par exemple dans le brevet FR 2.756.046 (US 6.226.390).

A partir de ces motifs surfaciques, il est possible de créer les masques proprement dits, qui sont en fait des films positifs transparents où sont imprimés les réseaux poreux souhaités.

Ensuite, le procédé consiste à appliquer un masque sur la plaque de verre, et à réaliser une attaque du verre, protégée par le masque. On peut procéder comme suit :

*B- Impression du masque sur une plaque de verre : Sérigraphie*

Cette étape est illustrée sur les figures 5A à 5D. La technique consiste à faire passer de l'encre (V) au travers d'un écran ajouré (ES), comme l'illustre la figure 5C. Cette encre se dépose ainsi sur le support en y dessinant les formes ouvertes de l'écran. Cet écran (ES) est constitué d'un cadre en bois ou en aluminium, sur lequel on applique une maille de polyester (MP) de différentes finesses suivant le travail à réaliser. L'écran est réalisé (figure 5A) en enduisant le polyester d'une gélatine photosensible (GP), puis en plaçant sur celle-ci le masque (F) créé à l'étape A. En faisant réagir la gélatine, recouverte par le masque positif (F), à la lumière ultraviolette (UV), elle se modifie et ne demeurent perméables, que les parties non exposées (c'est-à-dire celles cachées par les parties imprimées du masque). L'encre (V) ne passera uniquement que par ces parties ouvertes de l'écran. La figure 5B illustre le résultat, c'est-à-dire l'écran de sérigraphie (ES).

Ce processus de la création de l'écran constitue la phase préparatoire de la sérigraphie. Le manipulateur doit ensuite positionner l'écran (ES) sur la plaque de verre (support à imprimer), puis transférer l'encre sur le support (figure 5C). À l'aide d'une raclette, il passe l'encre sur l'écran afin de la faire passer par les parties ajourées du cadre. L'encre se dépose sur le support. Cette action est communément appelée un passage. Cette encre (V), déposée par sérigraphie sur la plaque de verre, constitue en fait un vernis de protection. Ce vernis masque les parties de la plaque qui ne doivent pas être gravées: l'intérieur des disques est protégé.

Les modèles, ainsi obtenus, sont ensuite séchés, pour assurer le bon accrochage du vernis (V) sur la surface de la plaque. Le résultat est illustré sur la figure 5D.

*C- Gravure*

Les figures 6A à 6C illustrent cette étape. La gravure consiste alors à enlever de la matière dans les régions non protégées par le vernis, de façon à graver un ensemble de canaux entrecroisés formant un réseau dont les noeuds constituent des pores. Une gravure humide, par une solution aqueuse acide, peut être utilisée. Mais on peut également envisager une attaque en phase gazeuse.

L'acide fluorhydrique (HF) attaque fortement et rapidement toutes les surfaces silicatées. Avec certains de ses composés, il est le seul produit susceptible d'attaquer chimiquement le verre dans son épaisseur à une vitesse suffisante pour que son action puisse être pratiquement utilisable. L'acide fluorhydrique (HF masse molaire 20,02 g/mol) est en vente sous forme étendue à 40, 48 ou 70%. La forme 40%, la plus courante, est celle qui convient le mieux pour la gravure sur verre.

Le vernis précédemment utilisé pour la sérigraphie a évidemment été choisi pour être inattaquable à l'acide fluorhydrique, comme l'illustre la figure 6B qui représente un grossissement de la figure 6A.

En pratique, la gravure se fait en appliquant soigneusement de l'acide fluorhydrique sur la plaque de verre. Les parties vernies étant protégées, l'attaque se fait uniquement sur les parties vierges (transparentes). La profondeur de la gravure varie avec la durée du contact, c'est pourquoi il est important de maîtriser cette durée d'exposition à l'acide, afin d'avoir les creux autour des cercles et les veines (cuvettes) d'une profondeur la plus homogène possible.

Le temps d'attaque est d'environ 3 minutes avec l'acide à 40%. La profondeur recherchée est d'environ 0,3 mm. La détermination de ce temps d'attaque optimal a nécessité plusieurs essais par tranches de 30 secondes. La gravure est dite isotrope : le verre est attaqué de façon équivalente dans toutes les directions de l'espace.

A l'issue du temps d'attaque, la gravure est terminée, et la plaque est plongée dans l'eau claire pour stopper l'action de l'acide (Figure 6C).

La plaque comporte alors un réseau de canaux dimensionnés de façon à traduire des propriétés physiques du milieu poreux, c'est-à-dire que ce réseau de canaux possède une géométrie équivalente au réseau poreux du milieu, de façon à ce que les écoulements soient similaires dans les deux réseaux.

<u>2- Dépôt d'un revêtement électriquement conducteur à l'intérieur du réseau poreux</u>

Un objectif du procédé est de construire un micromodèle poreux représentatif de milieux poreux carbonaté. Pour ce faire, on utilise la technique de micromodèle en verre, représentatif de milieux poreux siliceux, à laquelle on ajoute un procédé permettant de déposer du carbonate de calcium ($CaCO3$) dans le réseau poreux du micromodèle. De cette façon, on obtient un micromodèle modèle en verre, permettant la visualisation des phénomènes d'écoulement, muni d'un réseau poreux carbonaté.

Cependant, les problèmes de ce traitement sont de deux ordres. Tout d'abord, le dépôt de $CaCO3$ doit être suffisamment adhérent (ce qui n'est pas possible par une technique purement chimique), tout en restant monocouche. De plus, le dépôt doit permettre une observation au microscope, et doit donc être suffisamment transparent.

L'idée consiste alors à développer une technique pour obtenir une couche de calcite uniforme et d'épaisseur connue dans un milieu transparent, afin d'être dans la capacité d'observer et d'interpréter les phénomènes microscopiques se déroulant dans des roches carbonatées.

Pour réaliser ce dépôt carbonaté, on utilise une technique d'électrodéposition. Le principe consiste à déposer du carbonate de calcium sur une électrode métallique portée à un potentiel électrique négatif par rapport à une électrode de référence. La réduction du dioxygène en ions hydroxydes entraîne une augmentation du pH à la surface de la concentration en ions carbonates, qui conduisent à la formation de la calcite.

Ce procédé permet un dépôt rapide et homogène de calcite, et une forte incrustation du cristal sur le métal, due au franchissement de la répulsion coulombienne, et aux interactions de Van der Walls.

L'épaisseur du dépôt est contrôlée par l'intensité du courant. Celle-ci décroît au cours de l'entartrage en raison des limitations à la diffusion des ions à travers la couche déposée. Aussi, on observe une diminution nette de la rapidité du processus après une épaisseur de quelques micromètres. Le temps d'obtention de cette épaisseur critique dépend du pouvoir entartrant de l'eau mais est de l'ordre de quelques minutes seulement. Il est néanmoins possible de continuer après ce temps d'entartrage pour faire croître légèrement le dépôt à l'aide du courant résiduel.

On peut donc envisager d'utiliser ce principe d'électrodéposition sur du verre préalablement rendu conducteur par un fin dépôt métallique. Ce traitement de surface, d'une épaisseur de quelques nanomètres, correspond à un assemblage d'une vingtaine de couches atomiques. Cette faible épaisseur permet de conserver le caractère transparent du verre, choisi pour cette qualité.

Cependant, la gravure du réseau consiste généralement en un processus de gravure humide par acide fluorhydrique. Cet acide attaque les minéraux mais non les métaux. De plus, la fermeture du micromodèle, avec la plaque de verre supérieure, par thermo soudage à 635°C, serait compromise. Pour correctement coller, aucune impureté ne doit se placer entre les verres ramollis, sous peine de perdre l'étanchéité et la résistance mécanique de l'ensemble.

En ce qui concerne les micromodèles, le traitement de surface est donc délicat, et nécessite un post-traitement : le revêtement métallique doit être déposé après gravure de la plaque de verre, uniquement à l'intérieur du réseau poreux, et non en surface de la plaque de verre.

Pour ce faire, on réalise un fin dépôt métallique (M) sur la plaque de verre déjà gravée, et sur laquelle le vernis est toujours en place. Le métal se dépose alors sur le vernis et au fond des trous (Fig. 7A).

Le dépôt métallique peut être réalisé avec de l'oxyde d'indium-étain (ou oxyde d'indium dopé à l'étain ou ITO

pour l'appellation anglaise : Indium tin oxide). Il s'agit d'un mélange d'oxyde d'indium (III) (In2O3) et d'oxyde d'étain (IV) (Sn02), dans la proportion massique typique de 90 % du premier et 10 % du second. La caractéristique principale de l'oxyde d'indium-étain est sa combinaison de conductivité électrique et de transparence optique. Les couches minces d'ITO sont le plus souvent déposées sur des surfaces par évaporation par faisceau d'électrons, dépôt physique par phase vapeur ou autres techniques de dépôt par vaporisation.

On retire ensuite le vernis à l'aide de solvants. La fine couche métallique déposée sur la vernis est retirée de la plaque, alors que le métal déposé au fond des trous reste bien accroché au verre. On obtient ainsi une plaque gravée (Figure 7B), sans impureté, mais avec une couche métallique uniquement au fond des canaux représentant les pores.

Cet exemple décrit l'utilisation d'un métal, mais tout autre matériau électriquement conducteur permet de réaliser le procédé selon l'invention.

3- Dépôt de carbonate de calcium dans les canaux

La réaction de précipitation suit deux lois différentes selon le pH. A pH inférieur à 10,3 à 25°C, la réaction principale est la suivante :

$$Ca^{2+} + 2HCO_3^- \leftrightarrow CaCO_3 + H_2O + CO_2$$

Pour un pH supérieur, la réaction peut être modélisée par :

$$Ca^{2+} + CO_3^{2-} \leftrightarrow CaCO_3$$

Par ailleurs, l'état d'équilibre d'une solution de carbonate de calcium est mesuré à l'aide d'un degré de saturation, noté S, et défini comme : $S = \frac{a(Ca^{2+})a(CO_3^{2-})}{K_s}$ où *a* représente l'activité de l'ion et $K_s$ le produit de solubilité.

Si S est inférieur à 1, la solution est sous-saturée et il est possible de dissoudre de la calcite. Au contraire, pour un ratio supérieur à 1, on devrait, d'un point de vue thermodynamique, précipiter du carbonate de calcium.

La technique d'électrodéposition requiert une solution potentiellement calcifiante, i.e. riche en ions calcium et en espèces carbonatés ($H_2CO_3$, $HCO_3^-$, $CO_3^{2-}$), dans laquelle est plongée la plaque de verre gravée. Ci-dessous est notée la composition d'une solution adéquate :

| | | |
|---|---|---|
| TH(°f) | = 60 | (TH est le degré hydrotimétrique] |
| $CaCl_2,2H_2O$ | : 0,882 g/L | |
| $NaHCO_3$ | : 1,008g/L | |
| HCL (1N) | : 9mL/L | (1N signifie 1 mole par litre) |

Puis, après avoir plongé la plaque de verre gravée dans une solution calcifiante, on porte le revêtement électriquement conducteur à un potentiel électrique négatif, de façon à réaliser un dépôt de carbonate de calcium dans les canaux. On peut par exemple porter le revêtement électriquement conducteur, qui joue le rôle d'électrode dans le cadre de l'électrodéposition, à un potentiel électrique négatif de -1,2V par rapport à une électrode de référence. La valeur choisie correspond au potentiel redox du couple (02, OH-). La réduction du dioxygène en ions hydroxydes entraîne une augmentation du pH à la surface et une hausse de la concentration en ions carbonates, qui conduit à la formation de la calcite.

4- Assemblage des deux plaques de verre

Le collage des plaques peut alors se faire par thermo soudage, dans un four dont la température est portée à 635°C.

La plaque gravée est placée sur un support en matériau réfractaire; la surface de ce matériau aura été préalablement polie (lissée) pour éviter toute trace sur la plaque de verre, puis, on referme le réseau par la plaque percée. Le positionnement des deux plaques doit être précis.

Deux briques réfractaires sont positionnées sur l'ensemble pour maintenir les surfaces à coller bien superposées et pour faciliter le collage.

La montée en température est de 5 degrés par minute jusqu'à 635°C. Après un palier d'une heure à cette température, le chauffage est arrêté. La température chute alors très lentement dans le four que l'on pourra rouvrir dès que la température aura atteint environ 50°C. Avec la chaleur, le verre se ramollit légèrement, sans déformation, les plaques se soudent. Après le refroidissement progressif, l'étanchéité latérale des micromodèles est assurée.
On obtient un micromodèle, tel que celui schématisé sur la figure 1.
Le procédé selon l'invention est rapide et facilement reproductible. Il donne une couche de calcite de très bonne qualité de par son homogénéité et son épaisseur régulière. L'adhérence des cristaux est optimale : seul un brossage fournit l'énergie nécessaire à leur arrachage.
Selon l'invention, la seconde plaque de verre constitue un moyen pour fermer de façon étanche le réseau de canaux formant un espace poreux. De façon avantageuse, ce moyen est une plaque de verre transparent, de façon à mieux visualiser les déplacements de fluides au sein du réseau. Mais on peut utiliser d'autres matériaux assurant une telle étanchéité.
En utilisant une plaque de verre transparent et lisse pour fermer le réseau, on peut observer les écoulements réactifs, c'est-à-dire, que l'on peut observer la disparition de calcite lors de l'écoulement des fluides.
Selon un autre mode de réalisation, on peut recouvrir la seconde plaque d'un dépôt de calcite, de façon à obtenir un réseau poreux totalement recouvert de calcite.

Utilisation du micromodèle

Un micromodèle, dont les pores sont recouverts de calcite, permet d'étudier en laboratoire les déplacements de fluides polyphasiques en milieu poreux carbonaté, tel qu'un réservoir souterrain. Le réseau de canaux doit bien évidemment être construit pour être représentatif du réseau poreux du réservoir souterrain.
Au cours d'une telle étude, on place le micromodèle dans un système adapté à appliquer une température et une pression souhaitée. Ceci permet d'être représentatif des conditions thermodynamiques du milieu poreux étudié. En effet, dans le cadre d'un réservoir pétrolier par exemple, les pressions et les températures sont élevées, au point d'influencer considérablement les déplacements de fluides (modifications de viscosité, changement de phase, réactions physico-chimiques, ...). Puis, une fois placé à température et pression désirées, on injecte un fluide polyphasique dans le réseau de canaux du micromodèle, et l'on étudie le déplacement du fluide, par transparence, à travers les plaques de verre transparent.
Un système permettant de réaliser une telle étude est décrit ci-après. Le principe de ce montage "Micromodèle haute pression/ haute température" comprend plusieurs parties distinctes constituées par :

- une pompe volumétrique d'injection des fluides,
- une étuve contenant cellules, robinetterie, clapets, régulateur de pression,
- une cellule de confinement contenant le micromodèle proprement dit,
- un stéréo microscope permettant la visualisation agrandie des fluides contenus dans le micromodèle,
- un dispositif de visualisation et d'acquisition d'images (caméra, photographie, enregistrement vidéo...),
- un PC assurant la commande des pompes et l'affichage des pressions et des températures.

Les fluides sont injectés dans le micromodèle puis récupérés en sortie avant de passer par un régulateur de pression, qui impose la pression de sortie à une valeur prédéterminée. La ligne d'injection est thermostatée à l'aide d'une résistance chauffante, afin de maintenir les conditions thermodynamiques jusqu'à l'entrée du milieu poreux.
Le micromodèle est en verre et par conséquent ne peut pas résister à un différentiel de pression trop élevé entre l'intérieur et l'extérieur. Il est donc contenu dans une cellule de confinement qui le maintient sous une pression extérieure d'azote. La surpression par rapport à la pression de pores est d'environ 2 bars.
La cellule de confinement contenant le micromodèle est conçue pour pouvoir travailler jusqu'à 200 bars. Elle est munie d'un système de chauffage intégré (avec bougies chauffantes) permettant des expériences au delà de 60°C. Pour la transparence, deux hublots en saphir, l'un situé au dessus et l'autre en dessous du micromodèle, permettent l'éclairage et la visualisation.

## Revendications

1. Dispositif pour l'étude de déplacement de fluides en milieu poreux carbonaté, comportant au moins une plaque de verre (PV1) sur laquelle est gravé un ensemble de canaux (R) formant un réseau, **caractérisé en ce que** lesdits canaux comportent un dépôt de carbonate de calcium.

2. Dispositif selon la revendication 1, dans lequel ledit réseau de canaux (R) a une géométrie déterminée pour permettre des écoulements similaires dans ledit réseau (R) et ledit milieu.

3. Dispositif selon l'une des revendications précédentes, **caractérisé en ce qu'**il comporte un moyen de fermeture étanche dudit réseau (R).

4. Dispositif selon l'une des revendications précédentes, dans lequel le moyen de fermeture étanche comporte un revêtement de calcite.

5. Dispositif selon l'une des revendications 3 et 4, dans lequel ledit moyen de fermeture étanche est une seconde plaque de verre (PV2), assemblée sur la face gravée de ladite plaque de verre (PV1), de façon à fermer ledit réseau (R).

6. Dispositif selon la revendication 5, dans lequel ladite seconde plaque de verre (PV2) comporte un premier orifice (EF) à une extrémité, et un second orifice (SF) à une autre extrémité, les orifices étant disposés de façon à pouvoir injecter par l'un des orifices des fluides à travers ledit réseau de canaux, et de façon à pouvoir extraire dudit dispositif par ledit second orifice, les fluides ayant circulé à travers ledit réseau (R).

7. Procédé de fabrication d'un dispositif pour l'étude de déplacement de fluides en milieu poreux carbonaté, dans lequel on grave sur une face d'une plaque de verre transparent un ensemble de canaux formant un réseau (GRAV), **caractérisé en ce que** le procédé comporte les étapes suivantes :

   - on dépose un revêtement électriquement conducteur à l'intérieur desdits canaux (DEPM);
   - on plonge ladite première plaque de verre dans une solution calcifiante (PSC); et
   - on porte ledit revêtement électriquement conducteur à un potentiel électrique, de façon à réaliser un dépôt de carbonate de calcium dans les canaux par électrodéposition (PN).

8. Procédé selon la revendication 7, dans lequel le revêtement électriquement conducteur est un revêtement métallique (M).

9. Procédé selon l'une des revendications 7 et 8, dans lequel on ferme ledit réseau de façon étanche en assemblant un moyen de fermeture, tel qu'une seconde plaque de verre (PV2), sur la face gravée de ladite plaque de verre (PV1).

10. Procédé pour l'étude en laboratoire du déplacement de fluides en milieu poreux carbonaté, tel qu'un réservoir souterrain, dans lequel :

    - on place le dispositif selon l'une des revendications 1 à 6 dans un système adapté à appliquer des conditions thermodynamiques choisies,
    - on injecte au moins un fluide dans ledit réseau de canaux, et
    - on observe le déplacement de fluides à travers ladite plaque de verre.

## Patentansprüche

1. Vorrichtung für die Untersuchung der Bewegung von Fluiden in porösem Karbonatmedium, umfassend mindestens eine Glasplatte (PV1), auf der eine Kanalanordnung (R) eingraviert ist, die ein Netz bildet, **dadurch gekennzeichnet, dass** die Kanäle eine Kalziumkarbonatablagerung umfassen.

2. Vorrichtung nach Anspruch 1, wobei das Kanalnetz (R) eine bestimmte Geometrie aufweist, um ähnliche Strömungen in dem Netz (R) und dem Medium zu ermöglichen.

3. Vorrichtung nach einem der vorhergehenden Ansprüche, **dadurch gekennzeichnet, dass** sie ein Mittel zum dichten

Schließen des Netzes (R) umfasst.

4. Vorrichtung nach einem der vorhergehenden Ansprüche, wobei das Mittel zum dichten Schließen einen Kalzitüberzug umfasst.

5. Vorrichtung nach einem der Ansprüche 3 und 4, wobei das Mittel zum dichten Schließen eine zweite Glasplatte (PV2) ist, die auf der gravierten Seite der Glasplatte (PV1) befestigt wird, um das Netz (R) zu schließen.

6. Vorrichtung nach Anspruch 5, wobei die zweite Glasplatte (PV2) eine erste Öffnung (EF) an einem Ende und eine zweite Öffnung {SF) an einem anderen Ende umfasst, wobei die Öffnungen derart angebracht sind, dass durch eine der Öffnungen Fluide durch das Kanalnetz injiziert werden können, und derart, dass aus der Vorrichtung durch die zweite Öffnung die Fluide, die durch das Netz (R) zirkulierten, extrahiert werden können.

7. Verfahren zur Herstellung einer Vorrichtung zum Untersuchen der Bewegung von Fluiden in porösem Karbonatmedium, wobei auf eine Seite einer transparenten Glasplatte eine Anordnung von Kanälen, die ein Netz bilden (GRAV), graviert wird, **dadurch gekennzeichnet, dass** das Verfahren die folgenden Schritte umfasst:

- Abscheiden eines elektrisch leitenden Überzugs im Innern der Kanäle (DEPM);
- Eintauchen der ersten Glasplatte in eine kalkbildende Lösung (PSC); und
- Anlegen eines elektrischen Potenzials an den elektrisch leitenden Überzug, um durch elektrisches Abscheiden (PN) eine Kalziumkarbonatablagerung in den Kanälen durchzuführen.

8. Verfahren nach Anspruch 7, wobei es sich bei dem elektrisch leitenden Überzug um einen Metallüberzug (M) handelt.

9. Verfahren nach einem der Ansprüche 7 und 8, wobei das Netz auf dichte Weise geschlossen wird, indem ein Verschlussmittel, wie beispielsweise eine zweite Glasplatte (PV2), auf der gravierten Seite der Glasplatte (PV1) befestigt wird.

10. Verfahren zum Untersuchen im Labor der Bewegung von Fluiden in porösem Karbonatmedium, wie beispielsweise einer unterirdischen Lagerstätte, wobei:

- die Vorrichtung nach einem der Ansprüche 1 bis 6 in einem System angeordnet wird, das geeignet ist, ausgewählte thermodynamische Bedingungen anzuwenden,
- mindestens ein Fluid in das Kanalnetz injiziert wird, und
- die Bewegung der Fluide durch die Glasplatte beobachtet wird.

## Claims

1. A device for the study of the displacement of fluids in a porous carbonate medium, comprising at least one glass plate (PV1) on which is etched an array of channels (R) forming a network, **characterised in that** said channels comprise a calcium carbonate deposit.

2. A device according to claim 1 wherein said array of channels (R) is of a given geometry to permit similar flows in said network (R) and said medium.

3. A device according to one of the preceding claims **characterised in that** it comprises a means for sealingly closing said network (R).

4. A device according to one of the preceding claims wherein the sealingly closing means comprises a calcite coating.

5. A device according to claim 3 and 4 wherein said sealingly closing means is a second glass plate (PV2) assembled to the etched face of said glass plate ((PV1) so as to close said network (R).

6. A device according to claim 5 wherein said second glass plate (PV2) has a first orifice (EF) at one end and a second orifice (SF) at another end, the orifices being so disposed as to be capable of injecting through one of the orifices fluids through said network of channels and capable of extracting from said device through said second orifice the fluids which have circulated through said network (R).

**7.** A process for the production of a device for the study of the displacement of fluids in a porous carbonate medium, in which an array of channels forming a network is etched (GRAV) on a face of a transparent glass plate, **characterised in that** the process comprises the following steps:

- depositing an electrically conductive coating within said channels (DEPM);
- immersing said first glass plate in a calcifying solution (PSC); and
- setting said electrically conductive coating to an electrical potential so as to produce a calcium carbonate deposit in the channels by electrodeposition (PN).

**8.** A process according to claim 7 wherein the electrically conductive coating is a metal coating (M).

**9.** A process according to one of claims 7 and 8 wherein said network is sealingly closed by assembling a closure means such as a second glass plate (PV2) on the etched face of said glass plate (PV1).

**10.** A process for the laboratory study of the displacement of fluids in a porous carbonate medium such as an underground reservoir, in which:

- placing the device according to one of claims 1 to 6 in a system adapted to apply selected thermodynamic conditions,
- injecting at least one fluid into said array of channels, and
- observing the movement of fluids through said glass plate.

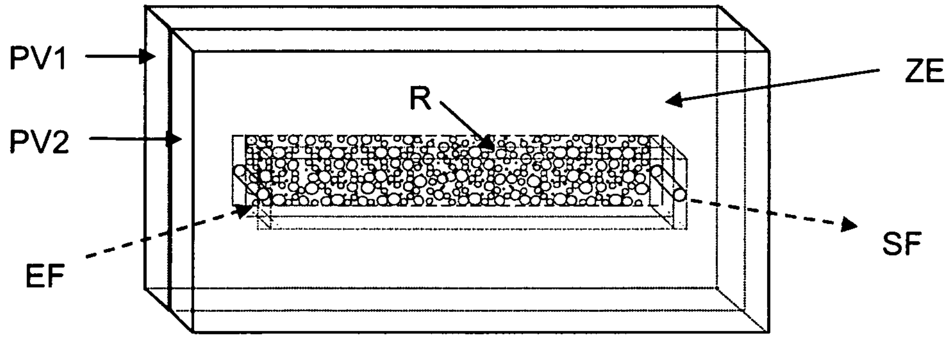


**Fig. 1**

PV1

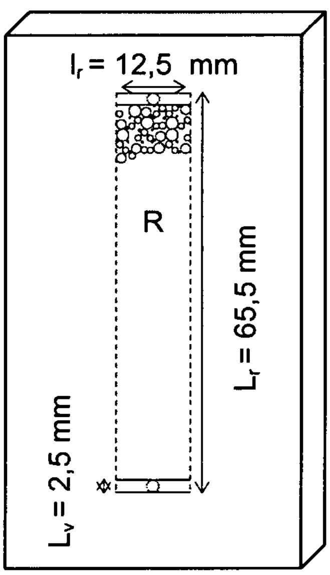


**Fig. 2A**

PV2

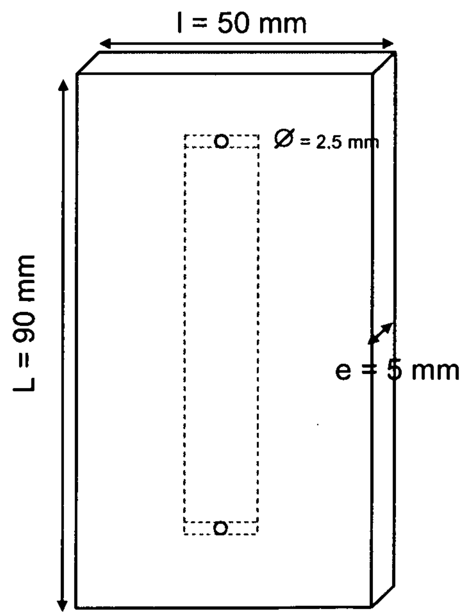


**Fig. 2B**

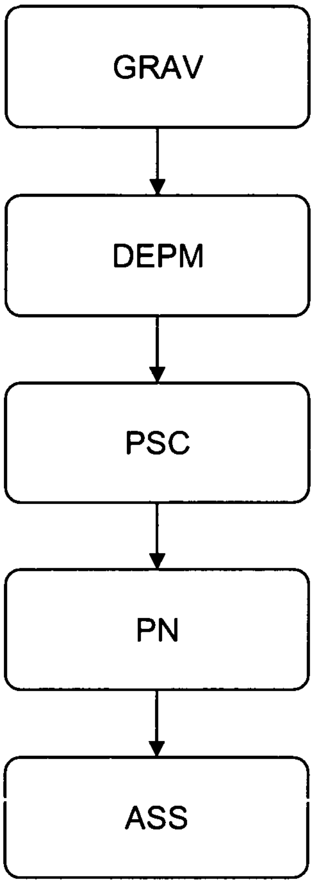


Fig. 3

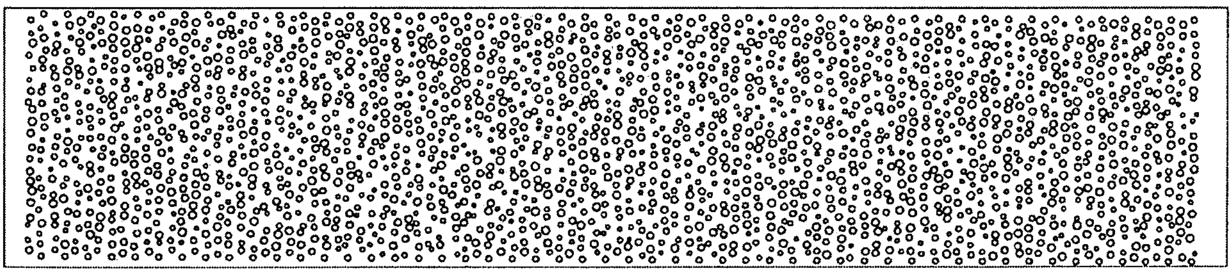

Fig. 4

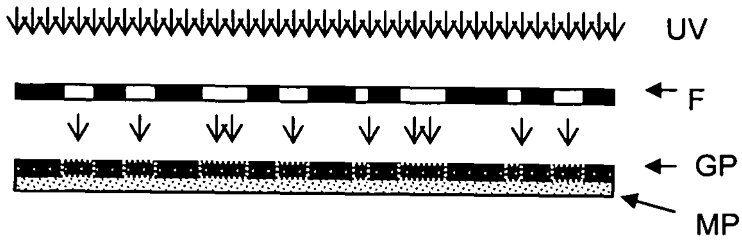


Fig. 5A

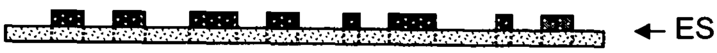


Fig. 5B

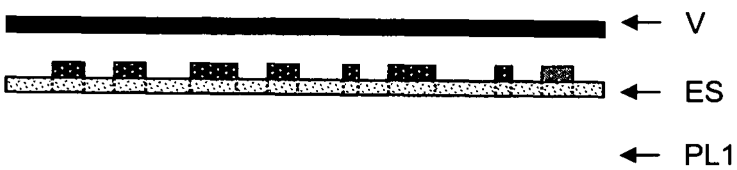


Fig. 5C

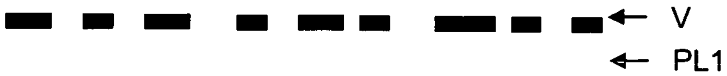


Fig. 5D

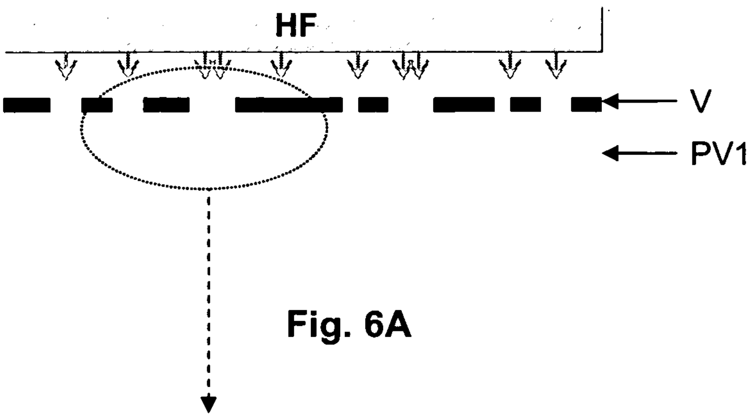


Fig. 6A

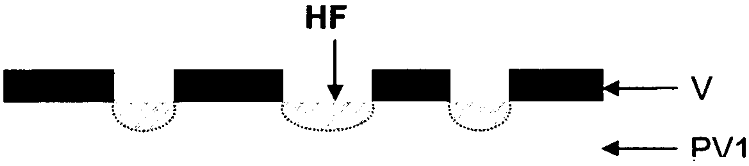


Fig. 6B

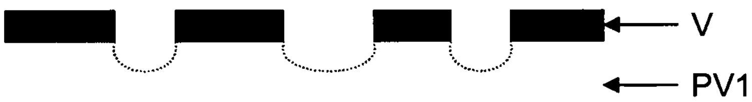


Fig. 6C

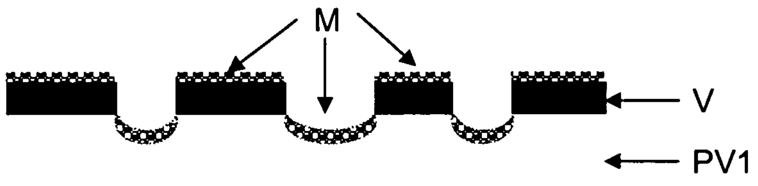


Fig. 7A

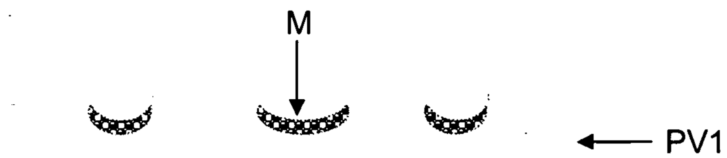


Fig. 7B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4882763 A
- EP 0189660 A
- FR 2756046
- US 6226390 B